(19) **Europäisches Patentamt**

**European Patent Office**

**Office européen des brevets**

(11) Numéro de publication : **0 329 526 B1**

(12) **FASCICULE DE BREVET EUROPEEN**

(45) Date de publication du fascicule du brevet :
29.04.92 Bulletin 92/18

(51) Int. Cl.⁵ : **B60R 13/08**

(21) Numéro de dépôt : **89400350.8**

(22) Date de dépôt : **08.02.89**

(54) **Dispositif d'insonorisation et son procédé de montage.**

(30) Priorité : **12.02.88 FR 8801957**

(43) Date de publication de la demande :
**23.08.89 Bulletin 89/34**

(45) Mention de la délivrance du brevet :
**29.04.92 Bulletin 92/18**

(84) Etats contractants désignés :
**DE GB IT**

(56) Documents cités :
**GB-A- 2 167 020**
**US-A- 4 043 022**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Dossin, Jacques**
**4, Rue de l'Alma**
**F-92400 Courbevoie (FR)**

(74) Mandataire : **Boivin, Claude**
**9, rue Edouard-Charton**
**F-78000 Versailles (FR)**

EP 0 329 526 B1

Jouve, 18, rue Saint-Denis, 75001 PARIS

**Description**

Certaines parois de la caisse d'un véhicule automobile, par exemple le tablier qui sépare le compartiment moteur et l'habitacle, sont réalisées en un matériau rigide, tel que l'acier; ce matériau a un rôle structural et la qualité de ses caractéristiques acoustiques doit être améliorée par l'appoint de pièces dites amortissantes. Ces parois sont aussi traversées par exemple par des organes de commande ou des conducteurs de fluides ou d'électricité.

Or ces traversées doivent être absolument étanches et cette fonction d'étanchéité ainsi que celle d'insonorisation ne peuvent pas être assurées directement par la paroi à cause :
– des dispersions de cotes de tous les éléments, dûes à la fabrication ou au montage de ces derniers,
– de la proximité des organes qui les traversent
– du relief trop tourmenté des organes qui sont implantés sur ces parois.

On est donc obligé actuellement de prévoir tout un ensemble de morceaux de matière insonorisants et de pièces spécifiques telles que des joints pour étancher chaque traversée. La manipulation de ces éléments est souvent délicate, à cause de leur souplesse et du manque d'accès.

Le document US-A-4,043,022 décrit un panneau d'insonorisation comprenant un panneau intérieur destiné à être fixé sur le tablier d'un véhicule et un panneau extérieur qui est fixé sur le panneau intérieur et à l'intérieur duquel se trouve une feuille capable de former une mousse par chauffage. Mais ce panneau d'insonorisation n'évite pas les difficultés de montage qui viennent d'être signalées.

La présente invention a pour objet un dispositif d'insonorisation qui est destiné à être monté sur un tablier de véhicule séparant le compartiment moteur de l'habitacle et traversé par divers organes, tels que la colonne de direction ou des conducteurs électriques ou de fluide, et qui évite toute difficulté de montage.

Ce dispositif comprend une platine en tôle destinée à être fixée sur le tablier et une pièce creuse qui est fixée sur la platine et à l'intérieur de laquelle se trouve une mousse en un matériau isolant, la platine et la pièce creuse présentant des ouvertures pour le passage et le support des susdits organes, caractérisé en ce que ladite pièce creuse est fermée sur elle-même et que la mousse s'y trouve injectée à l'intérieur.

La paroi latérale des ouvertures de la pièce creuse peut comporter des trous. Lors de l'injection de la mousse, celle-ci déborde et vient au contact des organes traversant ces ouvertures, ce qui assure l'étanchéité. Dans le cas de la colonne de direction, un palier de guidage peut être surmoulé sur la pièce creuse; ce palier assure l'étanchéité.

La présente invention a également pour objet un procédé de montage de ce dispositif d'insonorisation. Ce procédé est caractérisé en ce qu'on fixe la pièce creuse sur la platine, qu'on monte les organes sur cet ensemble, et qu'on injecte alors dans la pièce creuse une mousse en un matériau isolant.

On a décrit ci-après, à titre d'exemple non limitatif, un mode de réalisation du dispositif selon l'invention, appliqué à une platine support de pédales et regroupant toutes les traversées d'organes entre le compartiment moteur et l'habitacle, avec référence aux dessins annexés dans lesquels :

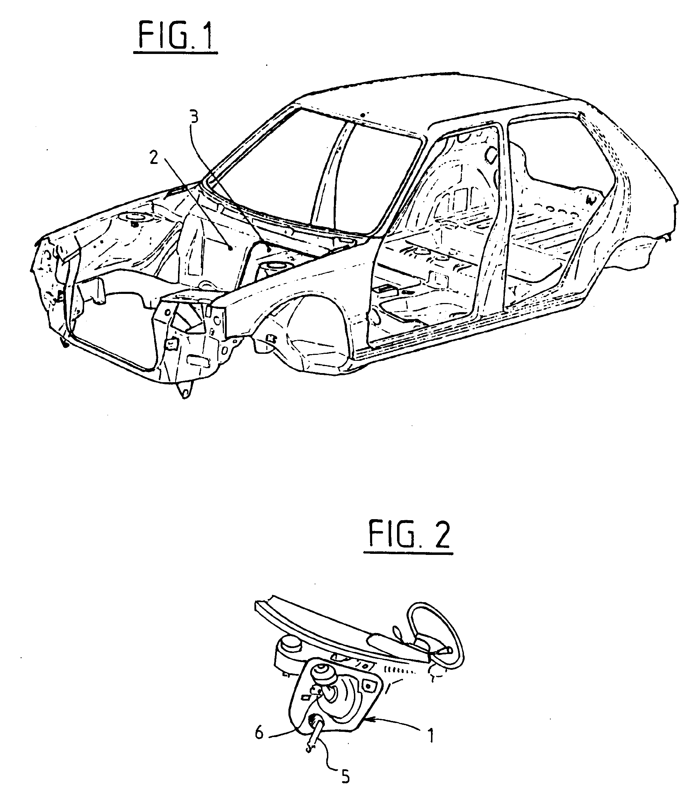

La Figure 1 est une vue en perspective du véhicule avant montage de la platine;
La Figure 2 est une vue en perspective de cette platine;
La Figure 3 montre la platine vue de l'habitacle;
Les Figures 4 à 6 sont des vues en coupe de la platine respectivement suivant IV-IV, V-V, VI-VI de la Figure 3.

Tel qu'il est représenté au dessin, le dispositif d'insonorisation qui est désigné d'une façon générale par la référence 1 est destiné à être fixé sur le tablier 2 d'un véhicule automobile, qui sépare le compartiment moteur de l'habitacle, au droit d'une ouverture 3 de ce tablier 2 et est revêtu intérieurement d'une matière d'insonorisation 4 . Ce dispositif est traversé notamment par la colonne de direction 5 et un conduit de passage du liquide de freinage 6.

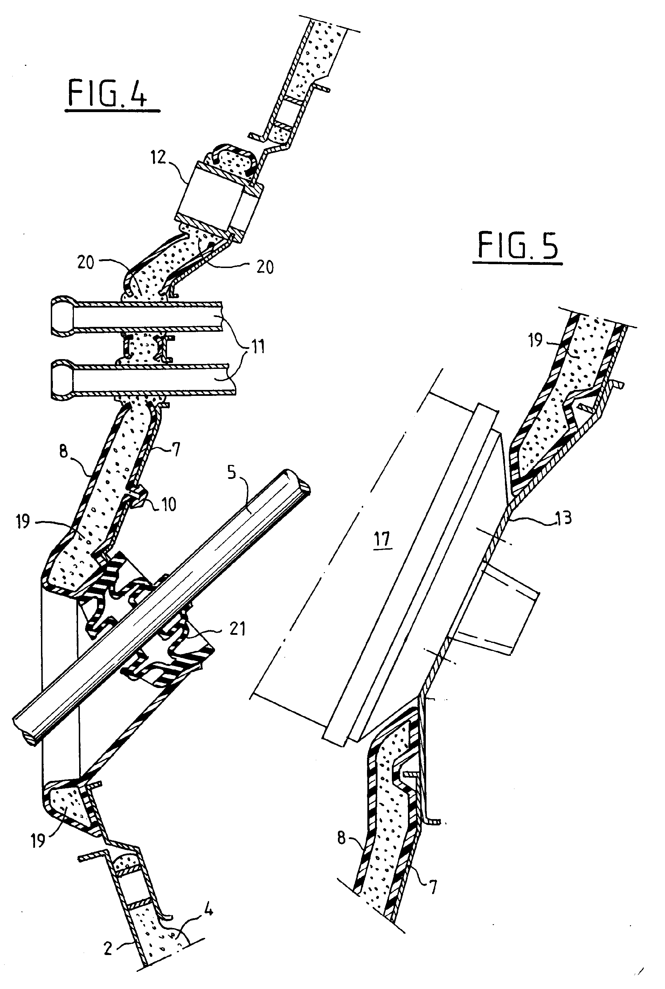

Le dispositif 1 comprend une platine en tôle 7 qui peut être fixée sur le tablier 2, et une pièce creuse 8 qui est fermée sur elle-même et fixée à la platine 7 par exemple par des boulons 9 ou par clippage comme indiqué en 10 à la Figure 4. Cette pièce creuse 8 est réalisée en un matériau thermoplastique, par exemple de l'ABS, par injection - soufflage ou extrusion-soufflage.

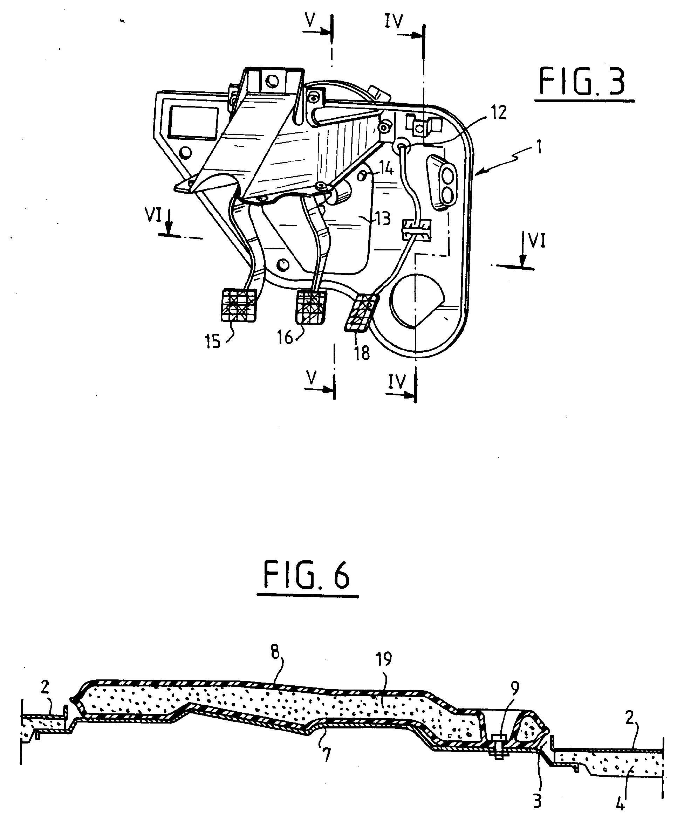

La platine 7 et la pièce creuse 8 présentent des ouvertures notamment pour le passage des tuyaux 11 du climatiseur, de la colonne de direction 5, et d'un manchon 12 traversé par la commande d'accélérateur. Dans leur partie centrale, ces éléments présentent une large ouverture sur les bords de laquelle (Figures 3 et 5) un élément de renfort 13 est fixé par des boulons 14 ou par soudure. Cet élément de renfort 13 supporte du côté de l'habitacle la pédale de freinage 15 et la pédale de débrayage 16 ainsi que, du côté du compartiment moteur, le dispositif d'assistance de freinage 17. La pédale d'accélérateur 18 est montée directement sur la platine 7.

Après fixation sur la platine 7 de la pièce creuse 8 et de l'élément de renfort 13, une mousse isolante 19 a été injectée à l'intérieur de la pièce 8; cette mousse 19 est de préférence constituée en un matériau bi-composant, par exemple de la mousse de polyuréthane. Lors de l'injection, la mousse a débordé au niveau des ouvertures prévues dans la pièce 8 pour le passage notamment du manchon 12 et des tuyaux 11 (Figure 4), grâce à des trous 20 prévus dans la paroi latérale des ouvertures; le débordement de mousse assure l'étanchéité.

Par contre, au niveau de la colonne de direction 5, l'ouverture prévue dans la pièce 8 présente une paroi latérale fermée, ce qui empêche la mousse de déborder et assure l'étanchéité grâce à un palier de guidage surmoulé 21.

## Revendications

1. Dispositif d'insonorisation destiné à être monté sur un tablier (2) de véhicule automobile séparant le compartiment moteur de l'habitacle et traversé par divers organes, tels que la colonne de direction ou des conducteurs électriques ou de fluide, comprenant une platine (7) en tôle estinée à être fixée sur le tablier (2) et une pièce creuse (8) qui est fixée sur la platine (7) et à l'intérieur de laquelle se trouve une mousse (19) en un matériau isolant, la platine (7) et la pièce creuse (8) présentant des ouvertures pour le passage et le support des susdits organes, caractérisé en ce que ladite pièce creuse (8) est fermée sur elle-même et que la mousse (19) s'y trouve injectée à l'intérieur.

2. Dispositif selon la revendication 1, caractérisé en ce que la paroi latérale des ouvertures comporte des trous (20).

3. Dispositif selon la revendication 1 ou 2, caractérisé en ce qu'un palier de guidage (21) est surmoulé sur la pièce creuse (8).

4. Dispositif selon l'une des revendications 1 à 3, caractérisé en ce que la pièce creuse (8) est réalisée en un matériau thermoplastique, par exemple de l'ABS, par injection-soufflage ou extrusion-soufflage.

5. Dispositif selon l'une des revendications 1 à 4, caractérisé en ce que la mousse (19) est constituée par un matériau bi-composant, par exemple de la mousse de polyuréthane.

6. Procédé de montage du dispositif d'insonorisation selon l'une quelconque des revendications précédentes, caractérisé en ce qu'on fixe la pièce creuse (8) sur la platine (7), qu'on monte les organes sur cet ensemble, et qu'on injecte alors dans la pièce creuse (8) une mousse (19) en un matériau isolant qui assure l'étanchéité sur les organes par débordement par les trous (20).

## Patentansprüche

1. Vorrichtung zur Schalldämmung, die zur Montage an einer Stirnwand (2) eines Kraftfahrzeugs zur Trennung des Motorraums vom Fahrgastraum bestimmt ist, welche von verschiedenen Organen, wie der Lenksäule oder elektrischen Leitungen oder Fluidleitungen, durchdrungen ist, mnit einer Tragplatte (7) aus Blech, die zur Befestigung auf der Stirnwand (2) bestimmt ist und einem hohlen Bauteil (8), welches auf der Tragplatte (7) befestigt ist und in dessen Innenraum sich ein Schaum (19) aus einem isolierenden Material befindet, wobei die Tragplatte (7) und das hohle Bauteil (8) Öffnungen zur Durchführung und Halterung der besa ten Organe aufweist, dadurch gekennzeichnet, daß das besagte hohle Bauteil (8) in sich geschlossen ist und der Schaum (19) in seinen Innenraum eingespritzt ist.

2. Vorrichtung nach Anspruch 1, dadurch gekennzeichnet, daß die Seitenwand der Öffnungen Löcher (20) aufweist.

3. Vorrichtung nach Anspruch 1 oder 2, dadurch gekennzeichnet, daß auf das hohle Bauteil (8) ein Führungslager (21) aufgeformt ist.

4. Vorrichtung nach einem der Ansprüche 1 bis 3, dadurch gekennzeichnet, daß das hohle Bauteil (8) aus einem thermoplastischen Material, beispielsweise ABS, durch Spritzblasen oder Extrusionsblasen hergestellt ist.

5. Vorrichtung nach einem der Ansprüche 1 bis 4, dadurch gekennzeichnet, daß der Schaum (19) durch ein Zweikomponenten-Material, beispielsweise als Polyurethanschaum, gebildet wird.

6. Verfahren zur Montage der Vorrichtung zur Schalldämmung nach einem der vorhergehenden Ansprüche, dadurch gekennzeichnet, daß man das hohle Bauteil (8) an der Tragplatte (7) befestigt, daß inan die Organe in diese Baueinheit einbaut und daß man dann einen Schaum (19) aus einem isolierendem Material in das hohle Bauteil (8) einspritzt, welches die Dichtigkeit an den Organen durch Überströmen durch die Löcher (20) sicherstellt.

## Claims

1. Noise insulation device intended to be mounted on a motor vehicle front body panel separating the engine compartment from the passenger compartment and traversed by various members, such as the steering column or electric or fluid conductors, said device including one steel mounting plate (7) intended to be secured to the front body panel (2), and one hollow piece (8) closed onto itself and secured to the mounting plate (7) and containing an insulating foam (19), the mounting plate (7) and the hollow piece (8) having openings allowing for the passage and support of said members, wherein said hollow piece (8) is closed onto itself and the foam (19) is contained inside.

2. Device according to claim 1, wherein the lateral wall of the openings comprises holes (20).

3. Device according to claim 1 or 2, wherein a guiding bearing (21) is in-moulded on the hollow piece (8).

4. Device according to any one of claims 1 to 3, wherein the hollow piece (8) is made of an injection-blow moulding or film blowing thermoplastic material, such as ABS.

5. Device according to any one of claims 1 to 4, wherein the foam (19) is made of a bicomponent material, such as polyurethane foam.

6. Method for mounting the insulation device according to any one of the preceding claims, wherein the hollow piece (8) is secured to the mounting plate, the members are mounted on this unit and a foam made of an insulating material is then injected into the hollow piece (8), this foam ensuring imperviousness on the members by projecting through the holes (20).

# FIG. 1

# FIG. 2

FIG. 3

FIG. 6

FIG.4

FIG.5